# EUROPEAN PATENT APPLICATION

(11) **EP 4 685 614 A1**
(43) Date of publication of application: **28.01.2026**
(21) Application number: 24774133.3
(22) Date of filing: 20.03.2024
(51) Int. Cl.: G06F 3/01

(54) **INTERACTION METHOD AND APPARATUS, AND DEVICE, MEDIUM AND PROGRAM**

(30) Priority: 21.03.2023 CN 202310280407
(71) Applicant: Beijing Zitiao Network Technology Co., Ltd., Beijing 100190 (CN)
(72) Inventor: WANG, Kexin, Beijing 100028 (CN)
(74) Representative: Isarpatent
(86) International application number: PCT/CN2024/082626
(87) International publication number: WO 2024/193568

(57) **Abstract**

Provided in the embodiments of the present application are an interaction method and apparatus, and a device, a medium and a program. The method comprises: according to an opening instruction for an interaction panel of a virtual object in a virtual scenario, acquiring relative position information of the interaction panel and the virtual object, wherein the relative position information is position information of the interaction panel relative to the virtual object after the last movement of the interaction panel; according to position information of the virtual object and the relative position information, determining target position information of the interaction panel; and according to the target position information of the interaction panel, displaying the interaction panel at a target position of the interaction panel. Relative position information of an interaction panel and a virtual object after the last movement of the interaction panel is recorded, such that when a user opens the interaction panel again, it can be ensured according to the relative position information that the relative positions of the interaction panel and the virtual object remain unchanged, without the need to adjust the position of the interaction panel of the virtual object again, thereby reducing additional operation costs and improving the user experience.

## Description

The present application claims the priority of Chinese Patent Application No. 202310280407.3 filed on March 21, 2023, the disclosure of which is incorporated by reference herein in its entirety as part of the present application.

### TECHNICAL FIELD

Embodiments of the present application relate to an interaction method and apparatus, a device, a medium and a program.

### BACKGROUND

Extended reality (XR) refers to combining the reality and the virtuality through a computer to create a virtual environment enabling human-computer interaction. XR is also a general term for multiple technologies such as virtual reality (VR), augmented reality (AR) and mixed reality (MR). By integrating visual interaction technologies of the three, the experiencer is provided with a "sense of immersion" of seamless switching between the virtual world and the physical world.

In an XR scene, multiple interactive panels are typically supported. A user can open multiple interactive panels in a virtual scene and move the positions of the interactive panels. Typically, when an interactive panel is opened for the first time, the interactive panel will be displayed in a default initial position. If the user moves the interactive panel, the interactive panel will be displayed in the default initial position the next time the interactive panel is opened, resulting in cumbersome operations on the interactive panel.

### SUMMARY

Embodiments of the present application provide an interaction method and apparatus, a device, a medium and a program.

In a first aspect, an embodiment of the present application provides an interaction method, including:
obtaining relative position information between an interactive panel and a virtual object in response to an opening instruction for the interactive panel of the virtual object in a virtual scene, where the relative position information is position information of the interactive panel relative to the virtual object after a previous movement of the interactive panel;
determining target position information of the interactive panel according to position information of the virtual object and the relative position information; and
displaying the interactive panel at a target position of the interactive panel according to the target position information of the interactive panel.

In some embodiments, the method further includes:
playing a guide effect, where the guide effect is used to indicate a correspondence between the virtual object and the interactive panel.

In some embodiments, the playing a guide effect includes:
determining a distance between the virtual object and the interactive panel according to the relative position information; and
playing the guide effect when the distance is greater than a preset distance.

In some embodiments, the method further includes:
controlling the guide effect to disappear when it is detected that the guide effect satisfies a preset condition.

In some embodiments, the guide effect satisfying the preset condition includes: a playing duration of the guide effect reaching a preset duration.

In some embodiments, the guide effect satisfying the preset condition includes: a number of playing times of the guide effect reaching a preset number of times.

In some embodiments, after the guide effect disappears, the method further includes:
replaying the guide effect when it is detected that a first operation is performed on the virtual object.

In some embodiments, the guide effect includes at least one guide line, a start position of the guide line is a position of the virtual object, and an end position of the guide line is the target position of the interactive panel; and
the playing a guide effect includes: controlling the guide line to extend from the start position to the end position according to a preset path.

In some embodiments, a streamer effect or a light spot effect is displayed around the guide line.

In some embodiments, the obtaining the relative position information between the interactive panel and the virtual object in response to the opening instruction for the interactive panel of the virtual object in the virtual scene includes:
obtaining relative position information and relative posture information between the interactive panel and the virtual object in response to the opening instruction for the interactive panel of the virtual object in the virtual scene; and
the method further includes: determining target posture information of the interactive panel according to posture information of the virtual object and the relative posture information; and
the displaying the interactive panel at the target position of the interactive panel according to the target position information of the interactive panel includes:
   displaying the interactive panel at the target position of the interactive panel according to the target position information and the target posture information of the interactive panel.

In some embodiments, before the displaying the interactive panel at the target position of the interactive panel according to the target position information of the interactive panel, the method further includes:
obtaining posture information of a user; and
the displaying the interactive panel at the target position of the interactive panel according to the target position information of the interactive panel includes:
displaying the interactive panel at the target position of the interactive panel according to the target position information of the interactive panel and the posture information of the user, where a posture of the interactive panel is oriented towards the user.

In some embodiments, the method further includes:
when the interactive panel of the virtual object is opened for the first time, determining an initial display position of the interactive panel of the virtual object according to a position of the virtual object and a preset initial relative position of the interactive panel of the virtual object relative to the virtual object;
displaying the interactive panel according to the initial display position of the interactive panel;
controlling the interactive panel to move in response to a moving instruction for the interactive panel; and
closing the interactive panel and saving relative position information between the interactive panel and the virtual object after the interactive panel is moved in response to a closing instruction for the interactive panel.

In some embodiments, the virtual scene is a scene defined by the user, and the virtual object is an object defined by the user.

In another aspect, an embodiment of the present application provides an interaction apparatus, including:
an obtaining module, configured to obtain relative position information between an interactive panel and a virtual object in response to an opening instruction for the interactive panel of the virtual object in a virtual scene, where the relative position information is position information of the interactive panel relative to the virtual object after a previous movement of the interactive panel;
a determination module, configured to determine target position information of the interactive panel according to position information of the virtual object and the relative position information; and
a display module, configured to display the interactive panel at a target position of the interactive panel according to the target position information of the interactive panel.

In another aspect, an embodiment of the present application provides an electronic device, including: a processor and a memory, where the memory is configured to store a computer program, and the processor is configured to invoke and run the computer program stored in the memory, to execute the method according to any one of the above embodiments.

In another aspect, an embodiment of the present application provides a computer-readable storage medium, configured to store a computer program, where the computer program, when executed by a computer, causes the computer to execute the method according to any one of the above embodiments.

In another aspect, an embodiment of the present application provides a computer program product, including a computer program, where the computer program, when executed by a processor, causes the method according to any one of the above embodiments to be implemented.

### BRIEF DESCRIPTION OF DRAWINGS

To illustrate the technical solutions in the embodiments of the present invention more clearly, the following briefly introduces the drawings required for describing the embodiments. Apparently, the drawings in the following description show merely some embodiments of the present invention, and a person of ordinary skill in the art may derive other drawings from these drawings without creative efforts.
Fig. 1 is a flowchart of an interaction method according to an embodiment of the present application;
Fig. 2 is a flowchart of an interaction method according to an embodiment of the present application;
Fig. 3 is a schematic diagram of display of an interactive panel of a virtual object;
Fig. 4 is a flowchart of an interaction method according to an embodiment of the present application;
Fig. 5 is a schematic diagram of operations on an interactive panel;
Fig. 6 is a schematic structural diagram of an interaction apparatus according to an embodiment of the present application; and
Fig. 7 is a schematic structural diagram of an electronic device according to an embodiment of the present application.

### DETAILED DESCRIPTION

The technical solutions in the embodiments of the present invention are described clearly and comprehensively below with reference to the drawings in the embodiments of the present invention. Apparently, the described embodiments are merely a part of rather than all embodiments of the present invention. All other embodiments obtained by a person of ordinary skill in the art based on the embodiments of the present invention without creative efforts shall fall within the protection scope of the present invention.

It should be noted that the terms "first" and "second" in the specification and claims of the present invention and the above drawings are used to distinguish between similar objects, and are not necessarily used to describe a particular order or sequence. It should be understood that the data used in this way can be interchanged as appropriate, so that the embodiments of the present invention described herein can be implemented in an order other than those shown or described herein. In addition, the terms "include/comprise" and "have" and any variations thereof are intended to cover a non-exclusive inclusion. For example, a process, method, system, product, or server that includes a list of steps or units is not necessarily limited to those clearly listed steps or units, but may include other steps or units not clearly listed or inherent to these processes, methods, products, or devices.

To facilitate understanding of the embodiments of the present application, some concepts involved in all embodiments of the present application are first explained and illustrated appropriately before describing the embodiments of the present application. The details are as follows.

XR is a general term for VR, AR, and AR technologies, and XR devices include but are not limited to VR devices, AR devices, and MR devices.

VR: a technology for creating and experiencing a virtual world. A virtual environment is generated by calculation and includes multi-source information (the virtual reality mentioned herein at least includes visual perception, but may also include auditory perception, tactile perception, motion perception, and even taste perception, olfactory perception, etc.), to achieve simulation of a fused, interactive three-dimensional dynamic scene of the virtual environment and entity behavior, so that the user is immersed in the simulated virtual reality environment, and applications of various virtual environments such as maps, games, videos, education, medical care, simulation, collaborative training, sales, assisted manufacturing, maintenance, and repair are implemented.

The VR device refers to a terminal that implements a virtual reality effect, and may be typically provided in the form of glasses, a head-mounted display (HMD), or a contact lens, to implement visual perception and other forms of perception. Certainly, a form implemented by the virtual reality device is not limited thereto, and may be further miniaturized or enlarged according to requirements.

AR: An AR setting refers to a simulated setting in which at least one virtual object is superimposed on a physical setting or a representation thereof. For example, an electronic system may have an opaque display and at least one imaging sensor, and the imaging sensor is used to capture an image or a video of the physical setting. The image or video is representations of the physical setting. The system combines the image or video with the virtual object and displays the combination on the opaque display. An individual uses the system to view the physical setting indirectly via the image or video of the physical setting, and observes the virtual object superimposed on the physical setting. When the system uses one or more image sensors to capture the image of the physical setting, and uses those images to present the AR setting on the opaque display, the displayed image is referred to as video pass-through. Alternatively, the electronic system for displaying the AR setting may have a transparent or semi-transparent display, and the individual can directly view the physical setting through the display. The system can display the virtual object on the transparent or semi-transparent display, so that the individual uses the system to observe the virtual object superimposed on the physical setting. For another example, the system may include a projection system that projects the virtual object into the physical setting. The virtual object may be projected, for example, on a physical surface or as a hologram, so that the individual uses the system to observe the virtual object superimposed on the physical setting. Specifically, in the process of collecting an image by the camera, the camera posture parameters of the camera in the physical world (or three-dimensional world, physical world) are calculated in real time, and virtual elements are added on the images collected by the camera according to the camera posture parameters. The virtual elements include but are not limited to: an image, a video, and a three-dimensional model. The goal of AR technology is to put the virtual world on the physical world on the screen for interaction.

MR: By presenting virtual scene information in a reality scene, an interactive feedback information loop is established between the physical world, the virtual world, and the user, to enhance a sense of reality of a user experience. For example, a sensory input (for example, a virtual object) created by a computer is integrated with a sensory input from a physical setting or a representation thereof in a simulated setting. In some MR settings, the sensory input created by the computer may be adapted to changes in the sensory input from the physical setting. In addition, some electronic systems for presenting the MR setting may monitor the orientation and/or position relative to the physical setting, so that the virtual object can interact with the physical object (that is, a physical element from the physical setting or a representation thereof). For example, the system may monitor the movement, so that a virtual plant appears to be stationary relative to the physical building.

A virtual reality device (VR device) is a terminal that implements a virtual reality effect, and may generally be provided in a form of glasses, a head-mounted display (HMD for short), or a contact lens, for implementing visual perception and other forms of perception. Certainly, a form implemented by the virtual reality device is not limited thereto, and may be further miniaturized or enlarged according to actual needs.

Optionally, the virtual reality device (i.e., the XR device) described in the embodiments of the present application may include but not limited to the following types:
1) A mobile virtual reality device, which supports setting a mobile terminal (such as a smart phone) in various ways (such as a head-mounted display provided with a dedicated card slot). The mobile terminal performs computing related to a virtual reality function through a wired or wireless connection with the mobile terminal, and outputs data to the mobile virtual reality device, for example, watching a virtual reality video through an APP of the mobile terminal;
2) An all-in-one virtual reality device, which has a processor for performing computing related to the virtual function, and thus has an independent function of virtual reality input and output, and does not need to be connected with a PC end or a mobile terminal, so that the degree of freedom of use is high; and
3) A PC virtual reality (PCVR) device, which performs computing related to a virtual reality function and outputs data using a PC end, and an external PC virtual reality device uses the data output by the PC end to achieve the virtual reality effect.

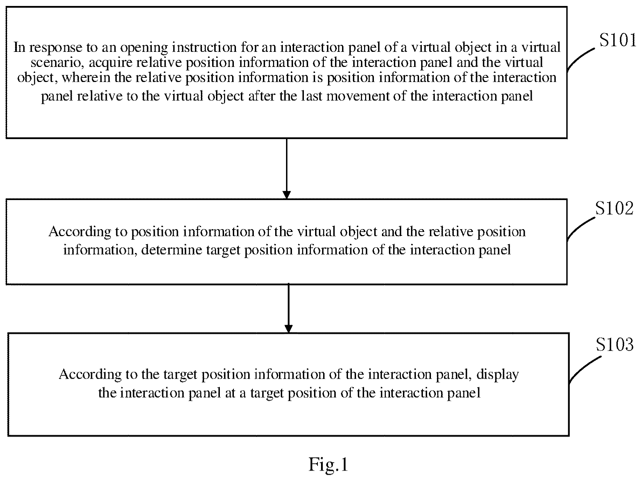

Fig. 1 is a flowchart of an interaction method according to an embodiment of the present application. The method is applied to electronic devices such as an XR device, an electronic device, and a personal computer. This embodiment is mainly described by taking the XR device as an example. As shown in Fig. 1, the method provided in this embodiment includes the following steps.

In S101, obtaining relative position information between an interactive panel and a virtual object in response to an opening instruction for the interactive panel of the virtual object in a virtual scene, where the relative position information is position information of the interactive panel relative to the virtual object after a previous movement of the interactive panel.

The virtual scene may be a 3D extended reality scene provided by the XR device, or may be a 2D virtual scene provided by a mobile phone, a computer, or the like.

The virtual scene may be a scene provided by a client or a scene defined by a user. Taking the XR device as an example, to meet the personalized needs of users, a user generated content (UGC) function is added, that is, the user can define a virtual scene in an editor provided by a game according to his/her own needs. The virtual scene defined by the user is also referred to as the user's own world, and other users can enter the user's defined scene to play.

The editor can provide some editing elements such as polyhedrons, controls, materials, physics, logic, music, sound effects, special effects, and materials for users to use, and users can define the virtual scene in the editor. The virtual scene defined by the user may be referred to as a UGC world or a UGC scene. The defined scene in the embodiments of the present application may be understood as a scene that is independently built by the user in the editor by using the editing elements provided by the editor.

In the process of creating the virtual scene, the user often needs to set and view parameters, attributes, functions, and the like of the virtual object in the virtual scene. The virtual object in the virtual scene may be an object, a prop, a control, or the like in the virtual scene, and the object may be a plant, an animal, a building, or the like in the virtual scene. The user typically sets and views the parameters, attributes, functions, and the like of the virtual object in the virtual scene based on the interactive panel of the virtual object. The virtual object may be an object defined by the user or an object provided by the system.

The interactive panel may be understood as a window or a pop-up window. The interactive panel displays the parameters, attributes, functions, and the like of the virtual object, and the user can modify and view the attributes, functions, and the like of the virtual object on the interactive panel. Therefore, the interactive panel may also be referred to as an attribute panel, a setting panel, and the like.

It may be understood that after the virtual scene is created, the user may open the interactive panel of the virtual object in the virtual scene in the process of playing the virtual scene.

The user operates on the virtual object to open the interactive panel of the virtual object, and the opening instruction for the interactive panel may be a click operation, a double-click operation, a hover operation, a long press operation, or the like on the virtual object by the user.

When the opening instruction for the interactive panel of the virtual object is received, the relative position information between the interactive panel and the virtual object is obtained, and the obtained relative position information is the position information of the interactive panel relative to the virtual object after a previous movement of the interactive panel. In this embodiment, each time the interactive panel moves its position, the relative position information of the interactive panel relative to the virtual object will be stored. Therefore, the relative position information between the interactive panel and the virtual object after a previous movement of the interactive panel can be obtained. After the interactive panel is opened for the first time, the interactive panel may be moved multiple times, and the last movement of the interactive panel refers to the latest movement of the interactive panel.

Exemplarily, when the opening instruction for the interactive panel of the virtual object is received, the relative position information between the interactive panel of the virtual object and the virtual object is queried according to the identification of the virtual object, where the relative position information is saved after a previous movement of the interactive panel. The relative position information may be stored in a server or locally in the XR device. When the relative position information is stored in the server, the XR device requests the relative position information from the server.

The relative position information between the interactive panel and the virtual object may be the displacement of each coordinate axis of the interactive panel relative to the virtual object in the coordinate system of the virtual scene, that is, the offset of the coordinate values of the interactive panel on the X, Y, and Z axes relative to the coordinate values of the virtual scene. Certainly, the relative position information may also be represented by other parameters, for example, the orientation and distance of the interactive panel relative to the virtual scene.

Optionally, after the interactive panel moves its position each time, the position information of the interactive panel and the virtual object in the virtual scene may also be stored separately, and the corresponding between them may be stored.

In S102, determining target position information of the interactive panel according to position information of the virtual object and the relative position information.

The position information of the virtual object in the virtual scene is known, and the target position information of the interactive panel in the virtual scene can be obtained according to the position information of the virtual object and the relative position information. The position information of the virtual object refers to the current position information of the virtual object, that is, the position information of the virtual object when the interactive panel is opened this time, and the target position information of the interactive panel refers to the position information that should be displayed after the interactive panel is opened this time.

After a previous movement of the interactive panel, the position of the virtual object may or may not have changed. If the position of the virtual object has not changed, the target position of the interactive panel determined according to the position of the virtual object and the relative position information when the interactive panel is opened this time is still the position of the interactive panel after the last movement. If the position of the virtual object changes, the target position of the interactive panel will also change relative to the position after the last movement. However, regardless of whether the position of the virtual object changes, the relative position of the interactive panel and the virtual object remains unchanged. This allows the user not to perceive the movement of the virtual object, and there is no need to move the interactive panel again, thereby reducing additional operation costs.

If the interactive panel of the virtual object is opened for the first time, the relative position information of the interactive panel after the last movement cannot be obtained, and the interactive panel will be displayed at a preset initial display position at this time.

Exemplarily, when the interactive panel of the virtual object is opened for the first time, the initial display position of the interactive panel of the virtual object is determined according to the position of the virtual object and the preset initial relative position of the interactive panel of the virtual object relative to the virtual object; and the interactive panel is displayed according to the initial display position of the interactive panel.

The initial display position is typically set in a place where the user can see, for example, the initial display position is a position 20 centimeters (cm) away from the virtual object in the upper left of the virtual object. Setting the initial display position of the interactive panel in the upper left of the virtual object is in line with the viewing habits of the user, and setting the interactive panel at a position 20 cm away from the virtual object ensures that the user can definitely see the interactive panel.

By saving the relative position information between the interactive panel and the virtual object, even if the user moves the position of the virtual object, the relative position between the interactive panel and the virtual object remains unchanged when the interactive panel is opened again according to the relative position information, and the user does not need to move the interactive panel again, thereby reducing additional operation costs and improving the user experience.

In S103, displaying the interactive panel at the target position of the interactive panel according to the target position information of the interactive panel.

In this embodiment, the relative position information between the interactive panel and the virtual object in the virtual scene is obtained in response to the opening instruction for the interactive panel of the virtual object, where the relative position information is the position information of the interactive panel relative to the virtual object after a previous movement of the interactive panel; the target position information of the interactive panel is determined according to the position information of the virtual object and the relative position information; and the interactive panel is displayed at the target position of the interactive panel according to the target position information of the interactive panel. By recording the relative position information between the interactive panel and the virtual object after the last movement of the interactive panel, when the user opens the interactive panel again, the relative position between the interactive panel and the virtual object remains unchanged according to the relative position information, and there is no need to readjust the position of the interactive panel of the virtual object, thereby reducing additional operation costs and improving the user experience.

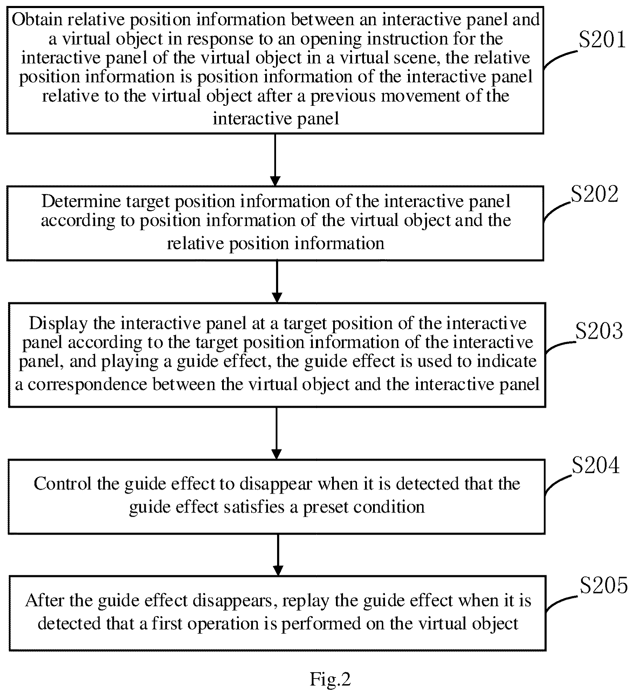

Based on the above embodiment, an embodiment of the present application provides an interaction method. For the same content, reference is made to the description of the above embodiment, and details are not described herein again in this embodiment. Fig. 2 is a flowchart of an interaction method according to an embodiment of the present application. As shown in Fig. 2, the method provided in this embodiment includes the following steps.

In S201, obtaining relative position information between an interactive panel and a virtual object in a virtual scene in response to an opening instruction for the interactive panel of the virtual object, where the relative position information is position information of the interactive panel relative to the virtual object after a previous movement of the interactive panel.

In S202, determining target position information of the interactive panel according to position information of the virtual object and the relative position information.

In S203, displaying the interactive panel at the target position of the interactive panel according to the target position information of the interactive panel, and playing a guide effect, where the guide effect is used to indicate a correspondence between the virtual object and the interactive panel.

In this embodiment, when the user opens the interactive panel again, not only the interactive panel is displayed at the position of the interactive panel after the last movement, but also the guide effect is played. The guide effect is used to indicate the correspondence between the virtual object and the interactive panel, that is, to indicate which virtual object the interactive panel belongs to.

In one scenario, the user may open multiple interactive panels in the virtual scene. When relatively more interactive panels are opened, the user may be unable to distinguish which interactive panel belongs to which virtual object, and thus cannot quickly locate the interactive panel of the virtual object. In this embodiment, when the interactive panel is displayed, the guide effect is played, and the user can accurately locate the interactive panel of the virtual object according to the guide effect.

In another scenario, the user may have moved the interactive panel of the virtual object to a very far position, so that the interactive panel of the virtual object cannot be quickly and accurately located. In this embodiment, when the interactive panel is displayed, the guide effect is played, and the user can accurately locate the interactive panel of the virtual object according to the guide effect.

Optionally, the guide effect includes at least one guide line, the start position of the guide line is the position of the virtual object, and the end position of the guide line is the target position of the interactive panel. Correspondingly, the XR device controls the guide line to extend from the start position to the end position according to a preset path, and the user can quickly locate the interactive panel of the virtual object according to the guide line.

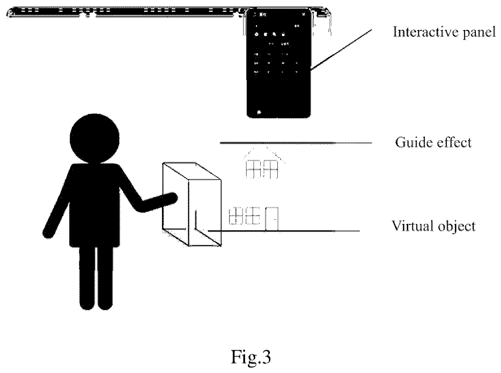

Optionally, a streamer effect or a light spot effect is displayed around the guide line, to bring better visual experience and interaction experience to the user. Referring to Fig. 3, Fig. 3 is a schematic diagram of display of the interactive panel of the virtual object. The guide line with the light spot effect displayed between the virtual object and the interactive panel is the guide effect.

Optionally, the guide effect further includes a sound effect. Through the visual and auditory effects, the user can be provided with a better experience.

It should be noted that there is no particular order between the display of the interactive panel and the display of the guide effect, and the two may also be displayed simultaneously. For example, the interactive panel is displayed first, and the guide effect is played after the interactive panel is displayed; or, the guide effect is played first, and the interactive panel is displayed after the guide effect is played; or, the guide effect and the interactive panel are displayed simultaneously. The interactive panel and the guide effect both start to move from the position of the virtual object, the guide effect is located at the end position of the interactive panel, and the interactive panel moves with the extension of the guide line of the guide effect until the interactive panel moves to the target position, and the interactive panel stops moving.

Optionally, in the process of the interactive panel moving with the guide line of the guide effect, the interactive panel may further gradually change from small to large.

In an implementation, a distance between the virtual object and the interactive panel may be determined according to the relative position information of the interactive panel relative to the virtual object after the last movement of the interactive panel. When the distance is greater than a preset distance, the guide effect is played; and when the distance is less than or equal to the preset distance, the guide effect is not played.

The distance between the virtual object and the interactive panel being greater than the preset distance indicates that the interactive panel is far away from the virtual object, and the user may not be able to see the interactive panel, or the interactive panel is not within the user's gaze point area, that is, the interactive panel is located at the edge of the user's viewing angle. At this time, by playing the guide effect, the user can quickly locate the interactive panel.

In S204, controlling the guide effect to disappear when it is detected that the guide effect satisfies a preset condition.

In this embodiment, the guide effect disappears when the preset condition is satisfied, and the guide effect may be caused to disappear by stopping playing the guide effect. In other embodiments of the present application, the guide effect may be repeatedly played until the user closes the interactive panel.

Optionally, the guide effect satisfying the preset condition includes: a playing duration of the guide effect reaching a preset duration, that is, the guide effect disappears after the preset duration. For example, the preset duration is 1 minute, and the guide effect disappears after being repeatedly played for 1 minute.

Exemplarily, the guide effect may be played in the following ways. In way one, after the guide line dynamically extends from the position of the virtual object to the target position of the interactive panel, the guide line dynamically extends from the position of the virtual object to the target position of the interactive panel again, and the above operation is repeatedly performed multiple times until the playing duration reaches the preset duration, and then the playing is stopped.

In way two, after the guide effect is played once, the final playing effect is maintained until the guide effect disappears after one minute. For example, the guide line dynamically extends from the position of the virtual object to the target position of the interactive panel, and the guide line no longer moves, and the state is maintained until the playing duration reaches the preset duration, and then the playing is stopped.

The guide effect satisfying the preset condition may further include: the number of playing times of the guide effect reaching a preset number of times, that is, the guide effect may also disappear after being played for the preset number of times. For example, the preset number of times are 1 or 2.

The guide effect satisfying the preset condition may further include: receiving a closing instruction for the guide effect, that is, the guide effect disappears after the closing operation of the user on the guide effect is received. Optionally, a closing control of the guide effect is displayed in the virtual scene, and the guide effect disappears after the closing control is clicked, or the guide effect is closed by performing operations such as clicking, hovering, and long pressing on the guide effect.

The guide effect disappearing when the preset condition is satisfied can avoid the guide effect from blocking the virtual scene or interfering with subsequent operations.

In S205, after the guide effect disappears, replaying the guide effect when it is detected that a first operation is performed on the virtual object.

Optionally, after the guide effect disappears and the interactive panel is not closed, if the user needs to quickly locate the interactive panel, the user may perform the first operation on the virtual object, and replay the guide effect when it is detected that the first operation is performed on the virtual object. The user can quickly locate the interactive panel corresponding to the virtual object according to the guide effect. The first operation may be a click operation, a double-click operation, a hover operation, a long press operation, or the like on the virtual object.

In this embodiment, after the target position information of the interactive panel is determined according to the relative position information between the interactive panel and the virtual object after the last movement of the interactive panel and the position of the virtual object, the interactive panel is displayed at the target position of the interactive panel, and the guide effect is played. The guide effect is used to indicate the correspondence between the virtual object and the interactive panel. By playing the guide effect, the user can accurately locate the interactive panel of the virtual object according to the guide effect, thereby bringing better experience to the user. The guide effect may disappear when the preset condition is satisfied, thereby avoiding the blocking of the virtual scene and the influence on the user operation.

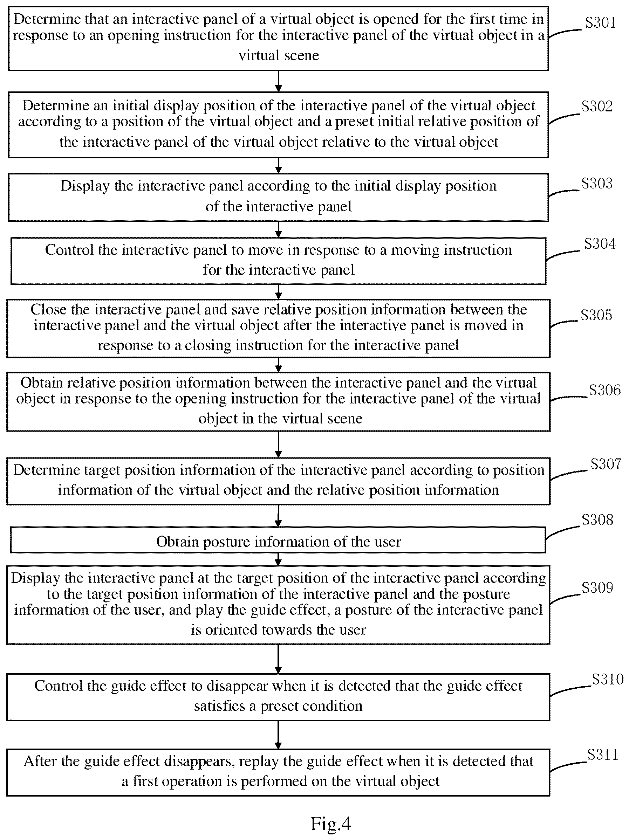

Based on the above embodiments, an embodiment of the present application provides an interaction method, which is used to describe a complete process from the first opening, position adjustment, to subsequent opening of the interactive panel of the virtual object. For the same content, reference is made to the description of the above embodiment, and details are not described herein again in this embodiment. Fig. 4 is a flowchart of an interaction method according to an embodiment of the present application. As shown in Fig. 4, the method provided in this embodiment includes the following steps.

In S301, determining that an interactive panel of a virtual object is opened for the first time in response to an opening instruction for the interactive panel of the virtual object in a virtual scene.

If the position information of the interactive panel after the last movement is not stored, it is determined that the interactive panel of the virtual object is opened for the first time, or an identification bit is set, and whether the interactive panel of the virtual object is opened for the first time is determined according to a value of the identification bit.

In S302, determining an initial display position of the interactive panel of the virtual object according to a position of the virtual object and a preset initial relative position of the interactive panel of the virtual object relative to the virtual object.

The initial relative position is preset, and the initial relative position is typically set in front of the virtual object and in a place where the user can easily see.

In S303, displaying the interactive panel according to the initial display position of the interactive panel.

In S304, controlling the interactive panel to move in response to a moving instruction for the interactive panel.

After the interactive panel is displayed at the initial display position, the user can move the position of the interactive panel according to his/her own needs.

Optionally, the user can also change the posture of the interactive panel.

In S305, closing the interactive panel and saving relative position information between the interactive panel and the virtual object after the interactive panel is moved in response to a closing instruction for the interactive panel.

Before closing the interactive panel, the user can move the interactive panel multiple times. Optionally, only the relative position information of the interactive panel relative to the virtual object when the interactive panel is closed may be saved.

If the user changes the pose of the interactive panel, the relative pose information of the interactive panel relative to the virtual object may further be saved.

In S306, obtaining relative position information between the interactive panel and the virtual object in response to the opening instruction for the interactive panel of the virtual object in the virtual scene.

In S307, determining target position information of the interactive panel according to position information of the virtual object and the relative position information.

In S308, obtaining posture information of the user.

The posture information of the user may be obtained through a positioning module of the XR device, and the XR device is provided with a simultaneous localization and mapping (SLAM) module or other modules for definition.

In S309, displaying the interactive panel at the target position of the interactive panel according to the target position information of the interactive panel and the posture information of the user, and playing the guide effect, where a posture of the interactive panel is oriented towards the user.

When the user opens the interactive panel this time, the posture of the user may have changed relative to the posture when the interactive panel was moved last time. In this embodiment, to facilitate the user to view the interactive panel, the posture of the interactive panel is determined according to the posture information of the user, so that the posture of the interactive panel is always oriented towards the user, thereby bringing better experience to the user.

In this embodiment, the posture information of the user is obtained, the target posture information of the interactive panel is determined according to the posture of the user, and the interactive panel is displayed according to the target position information and the target posture information of the interactive panel, so that the posture of the interactive panel is oriented towards the user. Optionally, in other embodiments of the present application, the target posture information of the interactive panel may not be determined according to the posture information of the user, but the target posture information of the interactive panel may be determined according to the posture information of the interactive panel after the last movement, and the posture of the interactive panel is consistent with the posture after the last movement.

Correspondingly, when the opening instruction for the interactive panel is received, not only the relative position information between the interactive panel and the virtual object is obtained, but also the relative posture information between the interactive panel and the virtual object is obtained. The target position information of the interactive panel is determined according to the position information of the virtual object and the relative position information, and the target posture information of the interactive panel is determined according to the posture information of the virtual object and the relative posture information. The interactive panel is displayed in the virtual scene according to the target position information and the target posture information of the interactive panel.

In S310, controlling the guide effect to disappear when it is detected that the guide effect satisfies a preset condition.

In S311, after the guide effect disappears, replaying the guide effect when it is detected that a first operation is performed on the virtual object.

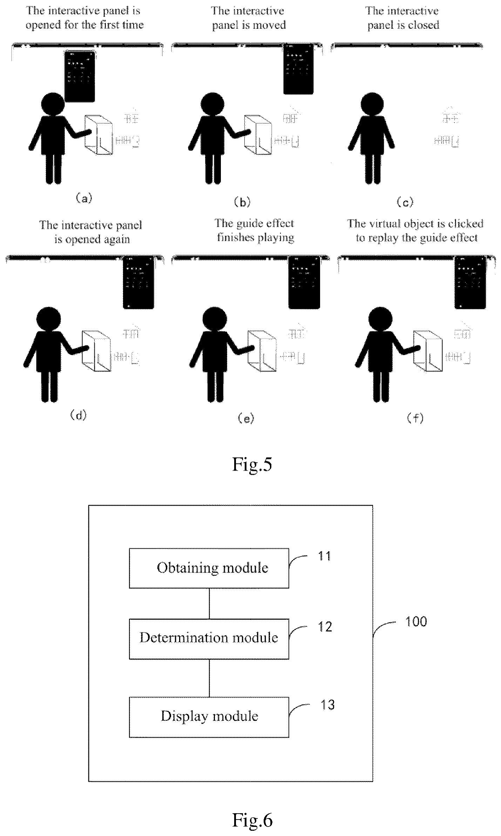

Fig. 5 is a schematic diagram of operations on an interactive panel. Fig. 5(a) is a schematic diagram of a user opening an interactive panel of a virtual object for the first time. When the user opens the interactive panel for the first time, the interactive panel is displayed at a preset initial relative position of the virtual object. Then, the user moves the position of the interactive panel to the position shown in Fig. 5(b). After the user completes the operations on the interactive panel, the user can close the interactive panel through a closing control on the interactive panel. After the interactive panel is closed, the virtual scene is as shown in Fig. 5(c).

After the interactive panel of the virtual object is closed, if the user opens the interactive panel again, the interactive panel is displayed at the position after the last movement, that is, the position shown in Fig. 5(b), and the guide effect shown in Fig. 5(d) is played once. After the guide effect is played, the guide effect disappears in the virtual scene, and the page of the virtual scene becomes as shown in Fig. 5(e). When the interactive panel is not closed, the user clicks on the virtual object again, and the guide effect is replayed once, as shown in Fig. 5(f).

In Fig. 5, the area shown as a cuboid is the bounding box of the virtual object. The bounding box is also referred to as a bounding volume or a collision body. The bounding box may be considered as a transparent object that covers or surrounds all or part of the virtual object, and the bounding box may be invisible to the user. The bounding box of the virtual object is an operable area of the virtual object, and when the user clicks on the virtual object, the click operation will take effect only when the user clicks on the area where the bounding box of the virtual object is located.

It may be understood that in the embodiments of the present application, not all of steps S301 to S311 are necessary steps, and may be selectively executed according to actual usage, or some steps may be replaced by other steps in actual processes. In addition, the execution order of the steps is not limited to the order shown in the above reference numbers. The order of some steps may be changed, and some steps may be executed in parallel.

To facilitate better implementation of the interaction method according to the embodiments of the present application, the embodiments of the present application further provide an interaction apparatus. Fig. 6 is a schematic structural diagram of an interaction apparatus according to an embodiment of the present application. As shown in Fig. 6, the interaction apparatus 100 may include:
an obtaining module 11, configured to obtain relative position information between an interactive panel and a virtual object in response to an opening instruction for the interactive panel of the virtual object in a virtual scene, where the relative position information is position information of the interactive panel relative to the virtual object after a previous movement of the interactive panel;
a determination module 12, configured to determine target position information of the interactive panel according to position information of the virtual object and the relative position information; and
a display module 13, configured to display the interactive panel at a target position of the interactive panel according to the target position information of the interactive panel.

In some embodiments, the display module 13 is further configured to:
play a guide effect, where the guide effect is used to indicate a correspondence between the virtual object and the interactive panel.

In some embodiments, the display module 13 is further configured to:
determine a distance between the virtual object and the interactive panel according to the relative position information; and
play the guide effect when the distance is greater than a preset distance.

In some embodiments, the display module 13 is further configured to:
control the guide effect to disappear when it is detected that the guide effect satisfies a preset condition.

In some embodiments, the guide effect satisfying the preset condition includes: a playing duration of the guide effect reaching a preset duration.

In some embodiments, the guide effect satisfying the preset condition includes: a number of playing times of the guide effect reaching a preset number of times.

In some embodiments, the display module 13 is further configured to:
after the guide effect disappears, replay the guide effect when it is detected that a first operation is performed on the virtual object.

In some embodiments, the guide effect includes at least one guide line, the start position of the guide line is the position of the virtual object, and the end position of the guide line is the target position of the interactive panel; and
the display module 13 is further configured to: control the guide line to extend from the start position to the end position according to a preset path.

In some embodiments, a streamer effect or a light spot effect is displayed around the guide line.

In some embodiments, the obtaining module 11 is further configured to:
obtain relative position information and relative posture information between the interactive panel and the virtual object in response to the opening instruction for the interactive panel of the virtual object in the virtual scene; and
the obtaining module 11 is further configured to: determine target posture information of the interactive panel according to posture information of the virtual object and the relative posture information; and
the display module 13 is further configured to:
display the interactive panel at the target position of the interactive panel according to the target position information and the target posture information of the interactive panel.

In some embodiments, the obtaining module 11 is further configured to: obtain posture information of the user; and
the display module 13 is further configured to:
display the interactive panel at the target position of the interactive panel according to the target position information of the interactive panel and the posture information of the user, where the posture of the interactive panel is oriented towards the user.

In some embodiments, the display module 13 is further configured to:
when the interactive panel of the virtual object is opened for the first time, determine an initial display position of the interactive panel of the virtual object according to a position of the virtual object and a preset initial relative position of the interactive panel of the virtual object relative to the virtual object;
display the interactive panel according to the initial display position of the interactive panel;
control the interactive panel to move in response to a moving instruction for the interactive panel; and
close the interactive panel and save relative position information between the interactive panel and the virtual object after the interactive panel is moved in response to a closing instruction for the interactive panel.

In some embodiments, the virtual scene is a scene defined by the user, and the virtual object is an object defined by the user.

It should be understood that the apparatus embodiments and the method embodiments may correspond to each other, and for similar descriptions, reference may be made to the method embodiments. To avoid repetition, details are not described herein again.

The apparatus 100 according to the embodiments of the present application is described above from the perspective of functional modules with reference to the drawings. It should be understood that the functional modules may be implemented in hardware, software instructions, or a combination of hardware and software modules. Specifically, the steps of the method embodiments in the embodiments of the present application may be completed by hardware integrated logic circuits and/or software instructions in a processor. The steps of the methods disclosed in the embodiments of the present application may be directly embodied as being executed and completed by a hardware decoding processor or being executed and completed by a combination of hardware and software modules in a decoding processor. Optionally, the software module may be located in a mature storage medium in the art such as a random-access memory, a flash memory, a read-only memory, a programmable read-only memory, an electrically erasable programmable read-only memory, and a register. The storage medium is located in a memory, and the processor reads information in the memory and completes the steps in the above method embodiments in combination with its hardware.

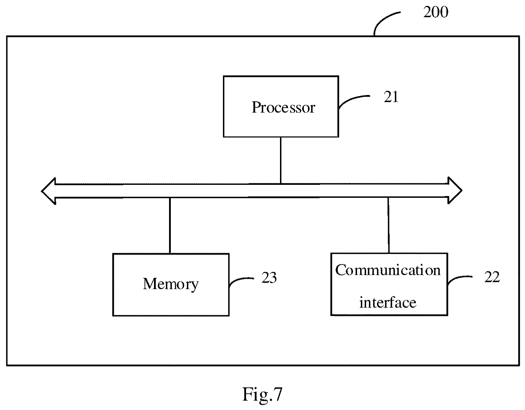

The embodiments of the present application further provide an electronic device. Fig. 7 is a schematic structural diagram of an electronic device according to an embodiment of the present application. As shown in Fig. 7, the electronic device 200 may include:
a memory 21 and a processor 22, where the memory 21 is configured to store a computer program and transmit the program code to the processor 22. In other words, the processor 22 may invoke and run the computer program from the memory 21 to implement the method in the embodiments of the present application.

For example, the processor 22 may be configured to perform the above method embodiments according to instructions in the computer program.

In some embodiments of the present application, the processor 22 may include but not limited to:
a general-purpose processor, a digital signal processor (DSP), an application-specific integrated circuit (ASIC), a field programmable gate array (FPGA) or other programmable logic device, a discrete gate or transistor logic device, a discrete hardware component, and the like.

In some embodiments of the present application, the memory 21 includes but not limited to:
a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM), which is used as an external cache. By way of exemplary but not restrictive illustration, many forms of RAM are available, such as static random-access memory (SRAM), dynamic random-access memory (DRAM), synchronous dynamic random-access memory (SDRAM), double data rate synchronous dynamic random-access memory (DDR SDRAM), enhanced synchronous dynamic random-access memory (ESDRAM), synch link dynamic random-access memory (SLDRAM), and direct rambus random-access memory (DR RAM).

In some embodiments of the present application, the computer program may be divided into one or more modules, and the one or more modules are stored in the memory 21 and executed by the processor 22 to complete the method provided in the present application. The one or more modules may be a series of computer program instruction segments capable of performing specific functions, and the instruction segments are used to describe the execution process of the computer program in the electronic device.

As shown in Fig. 7, the electronic device may further include: a transceiver 23, and the transceiver 23 may be connected to the processor 22 or the memory 21.

The processor 22 may control the transceiver 23 to communicate with other devices. Specifically, the transceiver 23 may send information or data to other devices or receive information or data sent by other devices. The transceiver 23 may include a transmitter and a receiver. The transceiver 23 may further include an antenna, and the number of the antennas may be one or more.

It may be understood that although not shown in Fig. 7, the electronic device 200 may further include a camera module, a Wi-Fi module, a positioning module, a Bluetooth module, a display, a controller, and the like, which will not be described herein again.

It should be understood that the components in the electronic device are connected through a bus system. The bus system includes a power bus, a control bus, and a status signal bus in addition to a data bus.

The present application further provides a computer storage medium, on which a computer program is stored, and the computer program, when executed by a computer, causes the computer to execute the method of the above method embodiments. Alternatively, the embodiments of the present application further provide a computer program product including instructions, and the instructions, when executed by a computer, cause the computer to execute the method of the above method embodiments.

The present application further provides a computer program product, which includes a computer program stored in a computer-readable storage medium. A processor of an electronic device reads the computer program from the computer-readable storage medium, and the processor executes the computer program to cause the electronic device to perform the corresponding processes in the method for controlling a user position in a virtual scene according to the embodiments of the present application. To be concise, details are not described herein again.

In the several embodiments provided in the present application, it should be understood that the disclosed system, apparatus and method may be implemented in other manners. For example, the apparatus embodiments described above are merely illustrative. For example, the division of the modules is merely a logical function division, and there may be other division manners in actual implementation. For example, a plurality of modules or components may be combined or integrated into another system, or some features may be ignored or not performed. In another point, the mutual coupling or direct coupling or communication connection shown or discussed may be indirect coupling or communication connection through some interfaces, apparatuses or modules, and may be electrical, mechanical or other forms.

The modules described as separate parts may or may not be physically separated, and the parts displayed as modules may or may not be physical modules, that is, may be located in one place, or may be distributed on a plurality of network units. Some or all of the modules may be selected according to actual needs to achieve the objectives of the solutions of the embodiments. For example, the functional modules in the embodiments of the present application may be integrated into one processing module, or each of the modules may exist alone physically, or two or more modules may be integrated into one module.

The above are merely specific implementations of the present application, but the protection scope of the present application is not limited thereto. Any person skilled in the art can easily think of changes or replacements within the technical scope disclosed by the present application, which shall be covered by the protection scope of the present application. Therefore, the protection scope of the present application shall be subject to the protection scope of the claims.

## Claims

1. An interaction method, comprising:
obtaining relative position information between an interactive panel and a virtual object in response to an opening instruction for the interactive panel of the virtual object in a virtual scene, wherein the relative position information is position information of the interactive panel relative to the virtual object after a previous movement of the interactive panel;
determining target position information of the interactive panel according to position information of the virtual object and the relative position information; and
displaying the interactive panel at a target position of the interactive panel according to the target position information of the interactive panel.

2. The method according to claim 1, further comprising:
playing a guide effect, wherein the guide effect is used to indicate a correspondence between the virtual object and the interactive panel.

3. The method according to claim 2, wherein the playing a guide effect comprises:
determining a distance between the virtual object and the interactive panel according to the relative position information; and
playing the guide effect when the distance is greater than a preset distance.

4. The method according to claim 2 or 3, further comprising:
controlling the guide effect to disappear when it is detected that the guide effect satisfies a preset condition.

5. The method according to claim 4, wherein the guide effect satisfying the preset condition comprises: a playing duration of the guide effect reaching a preset duration.

6. The method according to claim 4 or 5, wherein the guide effect satisfying the preset condition comprises: a number of playing times of the guide effect reaching a preset number of times.

7. The method according to any one of claims 4 to 6, wherein after the guide effect disappears, the method further comprises:
replaying the guide effect when it is detected that a first operation is performed on the virtual object.

8. The method according to any one of claims 2 to 7, wherein the guide effect comprises at least one guide line, a start position of the guide line is a position of the virtual object, and an end position of the guide line is the target position of the interactive panel; and
the playing a guide effect comprises: controlling the guide line to extend from the start position to the end position according to a preset path.

9. The method according to claim 8, wherein a streamer effect or a light spot effect is displayed around the guide line.

10. The method according to any one of claims 1 to 7, wherein the obtaining relative position information between an interactive panel and a virtual object in response to an opening instruction for the interactive panel of the virtual object in a virtual scene comprises:
obtaining relative position information and relative posture information between the interactive panel and the virtual object in response to the opening instruction for the interactive panel of the virtual object in the virtual scene, and
the method further comprises: determining target posture information of the interactive panel according to posture information of the virtual object and the relative posture information,
the displaying the interactive panel at a target position of the interactive panel according to the target position information of the interactive panel comprises:
displaying the interactive panel at the target position of the interactive panel according to the target position information and the target posture information of the interactive panel.

11. The method according to any one of claims 1 to 7, wherein before the displaying the interactive panel at a target position of the interactive panel according to the target position information of the interactive panel, the method further comprises:
obtaining posture information of a user; and
the displaying the interactive panel at a target position of the interactive panel according to the target position information of the interactive panel comprises:
displaying the interactive panel at the target position of the interactive panel according to the target position information of the interactive panel and the posture information of the user, wherein a posture of the interactive panel is oriented towards the user.

12. The method according to any one of claims 1 to 11, further comprising:
when the interactive panel of the virtual object is opened for a first time, determining an initial display position of the interactive panel of the virtual object according to a position of the virtual object and a preset initial relative position of the interactive panel of the virtual object relative to the virtual object;
displaying the interactive panel according to the initial display position of the interactive panel;
controlling the interactive panel to move in response to a moving instruction for the interactive panel; and
closing the interactive panel and saving relative position information between the interactive panel and the virtual object after the interactive panel is moved in response to a closing instruction for the interactive panel.

13. The method according to any one of claims 1 to 12, wherein the virtual scene is a scene defined by a user, and the virtual object is an object defined by the user.

14. An interaction apparatus, comprising:
an obtaining module, configured to obtain relative position information between an interactive panel and a virtual object in response to an opening instruction for the interactive panel of the virtual object in a virtual scene, wherein the relative position information is position information of the interactive panel relative to the virtual object after a previous movement of the interactive panel;
a determination module, configured to determine target position information of the interactive panel according to position information of the virtual object and the relative position information; and
a display module, configured to display the interactive panel at a target position of the interactive panel according to the target position information of the interactive panel.

15. An electronic device, comprising:
a processor and a memory, wherein the memory is configured to store a computer program, and the processor is configured to invoke and run the computer program stored in the memory, to perform the method according to any one of claims 1 to 13.

16. A computer-readable storage medium, configured to store a computer program, wherein the computer program, when executed by a computer, causes the computer to perform the method according to any one of claims 1 to 13.

17. A computer program product, comprising a computer program, wherein the computer program, when executed by a processor, causes the method according to any one of claims 1 to 13 to be implemented.
